# EUROPÄISCHE PATENTSCHRIFT

(11) **EP 2 227 370 B1**
(45) Veröffentlichungstag und Bekanntmachung des Hinweises auf die Patenterteilung: **21.08.2013**
(21) Anmeldenummer: 08869995.4
(22) Anmeldetag: 28.11.2008
(51) Int. Cl.: B29C 49/54, B65D 1/02, B29C 49/04, B29C 69/00

(54) **VERFAHREN UND VORRICHTUNG ZUM HERSTELLEN VON BEHÄLTERN AUS THERMOPLASTISCHEM KUNSTSTOFF**
METHOD AND DEVICE FOR PRODUCING CONTAINERS MADE OF THERMOPLASTIC
PROCÉDÉ ET DISPOSITIF DE FABRICATION DE RÉCIPIENTS EN MATÉRIAU THERMOPLASTIQUE

(30) Priorität: 12.01.2008 DE 102008004088
(43) Veröffentlichungstag der Anmeldung: 15.09.2010
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels, Martin Erich Arthur
(86) Internationale Anmeldenummer: PCT/EP2008/010103
(87) Internationale Veröffentlichungsnummer: WO 2009/086864

(56) Entgegenhaltungen:
- WO-A-88/05747
- WO-A-2006/034231
- DE-A1- 1 479 563
- DE-A1- 2 444 700
- DE-A1- 2 720 803
- FR-A- 2 508 004
- FR-A- 2 591 142
- JP-A- 8 244 749
- JP-A- 8 324 570
- JP-A- 11 042 697
- US-A- 3 819 789

## Beschreibung

Die Erfindung betrifft ein Verfahren zum Herstellen von Behältern aus thermoplastischem Kunststoff, gemäß der Merkmalsausgestaltung des Oberbegriffes des Patentanspruchs 1. Außerdem betrifft die Erfindung eine Vorrichtung zur Durchführung des Verfahrens.

Verfahren dieser Art, wie das System bottelpack^{®}, werden verbreitet eingesetzt, um Behältnisse verschiedener Formen, Größen und für unterschiedliche Verwendungszwecke herzustellen. Insbesondere kann es sich hierbei um transparente, flexible Behältnisse aus Polyethylen oder Polypropylen handeln. Vielfach werden in aseptischem Betrieb in einem Arbeitsgang die Behältnisse sowohl hergestellt, als auch mit sterilem Füllgut, beispielsweise Pharmazeutika, befüllt und verschlossen. Insbesondere wenn es sich um sehr teures Füllgut handelt, wie dies bei bestimmten Pharmazeutika der Fall sein kann, ist es für die Gebrauchseigenschaften des betreffenden Behälters wesentlich, dass die Entnahme des Füllgutes in geeigneter Weise erfolgen kann. Genauer gesagt, muß sichergestellt sein, dass sehr teure Medien, wenn sie durch Zusammendrücken des flexiblen Behältnisses ausgedrückt werden, ohne verbleibende Restmenge aus dem Behälter herausdrückbar sind und/oder dass, was insbesondere bei Pharmazeutika wesentlich ist, eine genaue Dosismenge ausgebbar ist.

Durch die US 3 819 789 A ist ein gattungsgemäßes Verfahren bekannt sowie eine diesbezügliche Vorrichtung zum Herstellen von Behältern aus thermoplastischem Kunststoff, bei dem in eine Form, deren bewegbare Formteile in eine die Form öffnende Stellung bewegt sind, ein extrudierter Kunststoffschlauch eingeführt wird, zumindest die den Übergang von Behälterhauptteil und Behälterboden bildenden Formteile geschlossen werden, wobei der Behälterboden verschweißt wird, der Schlauch durch einen an ihm wirksamen Druckgradient aufgeweitet und zur Bildung der Behälterform an die Wand der Formteile angelegt wird und die Formteile für das Entformen des gebildeten Behälters in die die Form öffnende Stellung bewegt werden, wobei der Behälterboden in der Form eines den Behälterhauptteil axial verlängernden, topfartigen Bodenteiles ausgebildet wird, wobei dieses zur Bildung einer in den Behälterhauptteil ragenden Bodener-hebung ins Innere des Behälters umgestülpt wird, und wobei das topfartige Bodenteil vor dem endgültigen Entformen des Behälters in dessen Inneres hinein umgestülpt wird.

Bei dem bekannten Verfahren nebst Vorrichtung wird ein an seinem einen freien Ende stirnseitig geschlossener extrudierter Kunststoffschlauch zwischen quer zur Einfahrrichtung des Schlauches bewegbare Formteile eingebracht und durch den aufgebrachten Druckgradienten geformt, wobei ein nach unten vorstehendes Behälterbodenteil von den den eigentlichen Behälterhauptteil formenden Hauptformteilen gleich mitgeformt wird, und nach unten und mithin zur Umgebung hin ist die Hauptform von einem mechanischen Stempel abgeschlossen, der bei einer Eingriffsbewegung zur Behälteröffnung das nach unten vorstehende Bodenteil nach innen hin umstülpt. Durch den permanenten Eingriff des mechanischen Umstülptempels in die Hauptform hinein sind neben Druckdichtigkeitsproblemen beim Aufbringen des formenden Druckgradienten, insbesondere thermische Probleme beim Herstellvorgang zu befürchten mit ungewollter vorzeitiger Abkühlung im Bereich des später umgestülpten Behälterbodens, was zur erhöhten Ausschussrate führen kann.

Durch die JP 11 042697 A ist ein Verfahren nebst Vorrichtung zum Herstellen von Behältern aus thermoplastischem Kunststoffmaterial bekannt, bei dem zwei bewegbare, voneinander getrennte Hauptformteile den Behälterhauptteil formen und zwei in jedem Verfahrensschritt aneinanderliegende Bodenformteile sind in axialer Richtung der Hauptformteile gesehen zum Umstülpen des Bodenteils nach innen zwischen den Hauptformteilen bewegbar geführt. Des Weiteren lassen die genannten beiden Bodenformteile einen Schlitz frei, zwecks Verschweißen des aus dem Kunststoffschlauch gebildeten Behälterbodens. Da beim Umstülpen des Behälterbodens nach Innen des Behälters und dem dahingehenden Einfahren der beiden Bodenformteile in die Hauptformteile das in diesem Randbereich randseitige Kunststoffmaterial scharf umgelenkt und nach innen geführt werden muss und mithin die Bodenformteile über die gesamte Bodenbreite den Behälterboden beim Umstülpen zwingend anheben müssen, sind insoweit der freien Formgestaltung des Behälterbodens, insbesondere was die Umstülptiefe anbelangt, Grenzen gesetzt, da es ansonsten im Bereich der Umlenkung zu einem Abreißen des Kunststoffmaterials kommen kann.

Ein weiteres Verfahren und eine Vorrichtung dieser Art sind aus den Dokument DE-B-1479563 bekannt.

Ausgehend von diesem Stand der Technik stellt sich die Erfindung die Aufgabe, ein Verfahren nebst Vorrichtung für die Herstellung von Behältern zur Verfügung zu stellen, deren Gebrauchseigenschaften im Hinblick auf das Entnehmen des Füllgutes optimiert sind und die die vorstehend beschriebenen Nachteile während der Herstellung nicht aufweisen.

Erfindungsgemäß ist diese Aufgabe durch ein Verfahren gelöst, das die Merkmale des Patentanspruches 1 in seiner Gesamtheit aufweist.

Dadurch dass das topfartige Bodenteil durch Bodenformteile gebildet wird, die relativ zu den den Behälterhauptteil formenden Hauptformteilen bewegbar sind und in der geschlossenen Stellung das Bodenteil verschweißen, und dass die Bodenformteile für das Umstülpen des Bodenteils durch mechanischen Eingriff in eine die Form teilweise öffnende Stellung entsprechend weit auseinander bewegt werden, kann das Umstülpen somit durch mechanischen Eingriff zwischen den entsprechend weit auseinander bewegten Bodenformteilen durchgeführt werden.

Da hierbei der Behälter noch innerhalb der Form fixiert ist, lässt sich der Vorgang des Umstülpens in gewünschter, genau kalibrierter Weise ohne Schwierigkeiten durchführen. Zudem lässt sich hierbei der Vorgang des Umstülpens in kontrollierter Weise bei einem Temperaturniveau durchführen, bei dem das Kunststoffmaterial zur Bildung einer bleibenden Bodenerhebung noch in geeigneter Weise plastisch verformbar ist. Im Hinblick hierauf kann es vorteilhaft sein, das Umstülpen des Bodenteiles vor dem Befüllen des Behälters mit Füllgut, also vor einer durch das Füllgut bewirkten Abkühlung, durchzuführen.

Wenn bei einem derartigen Behälter dann das Füllgut in der Weise abgegeben werden soll, dass der Behälter vom Boden her zusammengedrückt wird, dann wirkt diese Bodenerhebung als Verdrängerkörper, der sich für das vollständige Entleeren des Behälters in dessen Kopfbereich bewegen kann und das darin befindliche Volumen des Füllgutes herausdrückt und so das verbleibende Restvolumen minimiert.

Besonders bedeutsam ist dies bei Behältern, bei denen der Behälterhauptteil als Faltenbalg gestaltet ist, der zur Abgabe des Füllgutes in der Weise zusammengedrückt wird, dass die Falten des Faltenbalges miteinander zur Anlage kommen. Wenn dieser Zustand beim Ausdrücken erreicht ist, hat der Faltenbalg entsprechend der Anzahl der Falten eine gewisse Totlänge, die durch weiteres Zusammendrücken nicht verkürzbar ist, so dass am Ende des Vorganges des Zusammendrückens des Balges ein beträchtliches Restvolumen verbleibt. Wenn die erfindungsgemäß gebildete Bodenerhebung in Form und Abmessung an dieses Restvolumen in dem gegebenenfalls verjüngten Kopfbereich des Behälters angepasst ist, lässt sich auch bei Behältern mit Faltbalg das bei zusammengedrücktem Balg verbleibende Restvolumen minimieren.

Bei vorteilhaften Ausführungsbeispielen kann hierbei so vorgegangen werden, dass das Umstülpen des Bodenteiles mechanisch durch Beaufschlagen des Bodenteiles durch einen Stempel durchgeführt wird, der konzentrisch zur Behälterachse bewegbar angetrieben ist.

Diesbezüglich wird vorzugsweise so vorgegangen, dass vor dem Umstülpen des Bodenteiles das an dessen Schweißstelle befindliche Abfallmaterial mittels eines Abtrennelementes abgetrennt wird.

Gegenstand der Erfindung ist auch eine Vorrichtung zum Durchführen des Verfahrens, mit den Merkmalen des Anspruchs 4.

Dabei ist die Anordnung vorzugsweise so getroffen, dass die Bodenformteile Schweißbacken zum Verschweißen des topfartigen Bodenteiles aufweisen.

Für das Umstülpen des Bodenteiles in das Innere des Behälters ist vorzugsweise ein für eine hin- und hergehende Axialbewegung antreibbarer, auf die Behälterlängsachse ausrichtbarer Druckstempel vorgesehen, mittels dessen bei entsprechend geöffneten Bodenformteilen das topfartige Bodenteil in den Behälterhauptteil hinein umstülpbar ist.

Um für die Anlage des Druckstempels eine von Unregelmäßigkeiten freie Anlagefläche zur Verfügung zu stellen, ist bei bevorzugten Ausführungsbeispielen ein mechanisch bewegbares, bei entsprechend geöffneten Bodenformteilen auf die Behälterlängsachse ausrichtbares Abtrennelement zum Entfernen des an der Schweißstelle des topfartigen Bodenteiles gebildeten Bodenabfalles vorgesehen.

Nachstehend ist die Erfindung anhand der Zeichnung im Einzelnen erläutert. Es zeigen:
- Fig. 1 eine schematisch vereinfachte Darstellung einer geöffneten Blasform und eines oberhalb befindlichen Extrusionskopfes zur Bildung eines Schlauches aus plastifiziertem Kunststoffmaterial;
- Fig. 2 die teilweise geschlossene Blasform von Fig. 1 in dem Betriebszustand des Aufweitens des bodenseitig verschweißten Schlauches mittels Blasluft zur Ausbildung der Behälterform;
- Fig. 3 den Betriebszustand des Befüllens des Behälters mit Füllgut;
- Fig. 4 den Betriebszustand mit teilweise auseinandergefahrenen Bodenformteilen zur Freilegung eines Bodenabfalles an der bodenseitigen Schweißstelle;
- Fig. 5 den Betriebszustand nach Abtrennen des Bodenabfalles, wobei die Bodenformteile weiter auseinandergefahren und ein bewegliches Abtrennelement in axial ausgerichteter Position dargestellt sind;
- Fig. 6 den Betriebszustand, bei dem ein bewegbarer Druckstempel in axial ausgerichteter Position dargestellt ist;
- Fig. 7 den Betriebszustand mit mittels des Druckstempels umgestülptem Bodenteil und dadurch gegenüber Fig. 6 angehobenem Füllpegel;
- Fig. 8 den Betriebszustand mit angehobenem Füllpegel jedoch nach Ausbilden eines Kopfverschlußteiles des Behälters durch Schließen von Kopfformteilen;
- Fig. 9 eine Seitenansicht eines Ausführungsbeispieles des erfindungsgemäß hergestellten Behälters in Form eines axial zusammendrückbaren Faltenbalges und
- Fig. 10 eine perspektivische Darstellung eines weiteren Ausführungsbeispieles des Behälters mit einem sich zum Kopfbereich hin konisch verjüngenden Faltenbalg.

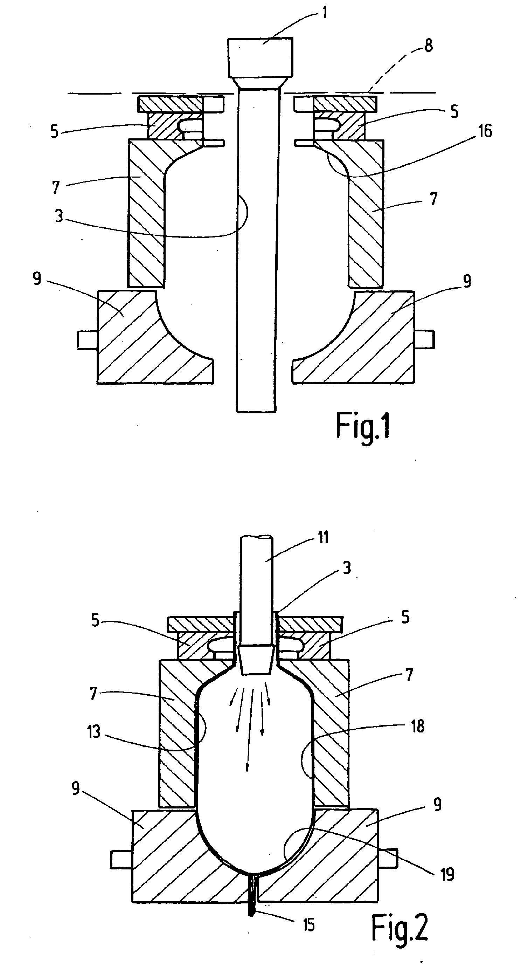

Die Fig. 1 bis 8 zeigen einen Teil einer Einrichtung, wie sie im Rahmen des bekannten bottelpack^{®}-Systems zum Herstellen von Kunststoffbehältnissen im Blasformverfahren benutzt wird, wobei mittels einer Extrudereinrichtung 1 ein Schlauch 3 aus aufgeschmolzenem Kunststoffmaterial zwischen bewegbare Formteile einer Blasform extrudiert wird, die in Fig. 1 in geöffnetem Zustand gezeigt ist und die paarweise angeordnete Kopfformteile 5, Behälter-Hauptformteile 7 und Bodenformteile 9 aufweist. Nach dem Extrudieren des Schlauches 3 in die geöffnete Form wird der Schlauch 3 zwischen dem Düsenaustritt der Extrudereinrichtung 1 und der Oberseite der Kopfformteile 5 durchtrennt. In Fig. 1 ist die Trennlinie gestrichelt dargestellt und mit 8 bezeichnet.

Die Fig. 2 zeigt den Betriebszustand, bei dem die Form durch Zusammenfahren der Hauptformteile 7 und der Bodenformteile 9 teilweise geschlossen ist und anstelle der Extrudereinrichtung 1 ein Blasdorn 11 in das obere Ende des Schlauches 3 eingefahren ist, um durch Blasluft den Schlauch 3 aufzuweiten und an die Formwände von Hauptformteilen 7 und Bodenformteilen 9 anzulegen und dadurch die Form des Behälters 13 zu bilden. Die geschlossenen Bodenformteile 9 sind mit Schweißbacken (in der Fig. nicht dargestellt) versehen, um den Schlauch 3 vor dem Einblasen der Blasluft bodenseitig zu verschweißen. Der hierbei an der Schweißstelle gebildete Bodenabfall ist in Fig. 2 mit 15 bezeichnet. Während die Hauptformteile 7 innere Formwände besitzen, die, abgesehen von dem an die Kopfformteile 5 angrenzenden, in Fig. 1 mit 16 bezeichneten und nach innen verjüngten Kopfbereich, auf dem Großteil ihrer axialen Länge kreiszylindrisch sind, bilden die inneren Formwände der Bodenformteile 9 Teilschalen, die in der geschlossenen Position eine halbkugelartige Form definieren, so dass der durch Blasluft aufgeweitete Schlauch 3 zu einem Behälter 13 geformt wird, der ein durch die Bodenformteile 9 gebildetes, topfartiges Bodenteil 19 besitzt, das sich an den Behälterhauptteil 18 als axiale Verlängerung anschließt. Während die Bodenformteile 9 in den Fig. 1 bis 6 als Teilschalen mit glatten Formwänden dargestellt sind, können diese auch treppenartig gestuft sein, so dass das gebildete Bodenteil 19 balgartige Falten besitzt.

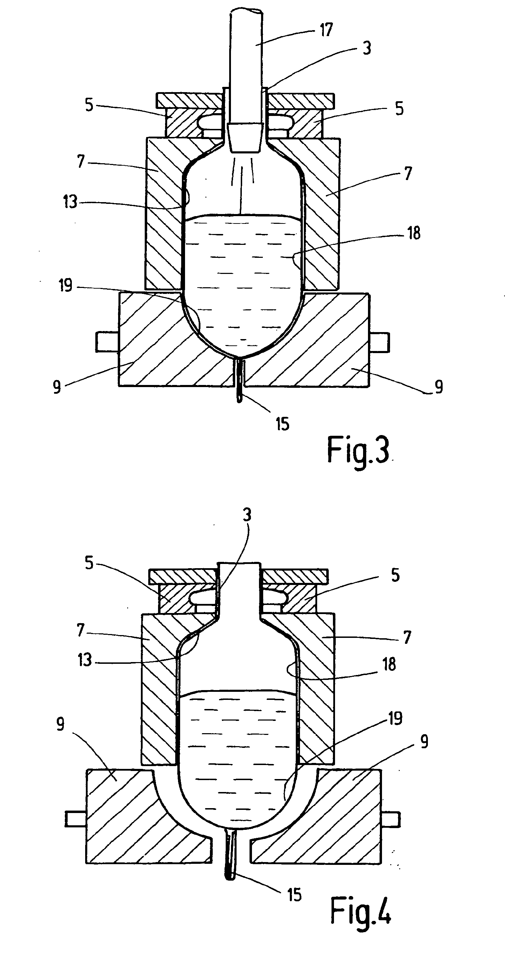

Fig. 3 zeigt den Zustand, bei dem der Blasdorn 11 durch einen Fülldorn 17 ersetzt ist, um eine vorbestimmte Menge fließfähigen Füllgutes einzuführen. Die Formteile befinden sich hierbei in der gleichen Position wie in Fig. 2 dargestellt. Anstelle der Benutzung gesonderter Dorne 11 bzw. 17 für das Blasen und Befüllen könnte ein kombinierter Blas-Fülldorn benutzt werden.

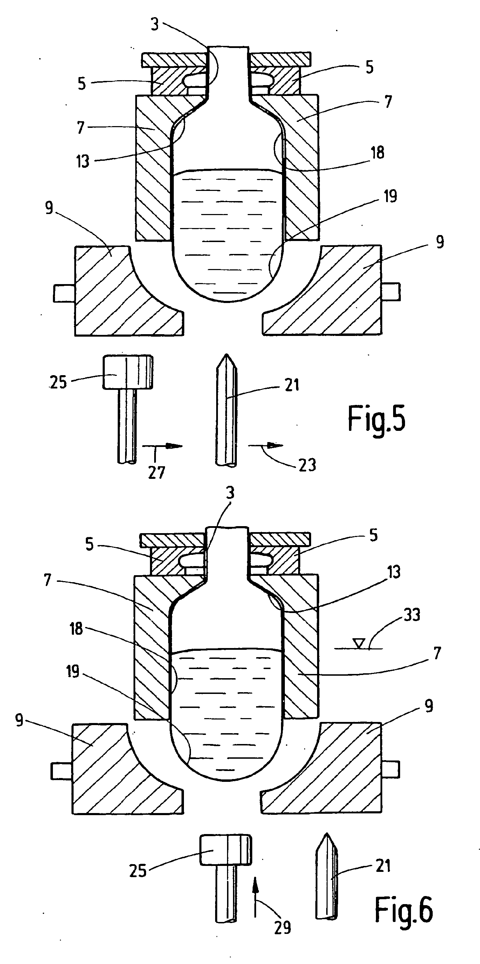

Fig. 4 zeigt, dass, während Kopfformteile 5 und Hauptformteile 7 in unveränderter Position sind, die Bodenformteile 9 aus der geschlossenen Position um eine Wegstrecke auseinandergefahren sind, die ausreicht, um den Bodenabfall 15 für ein Abtrennelement 21 (nur in Fig. 5 und 6 dargestellt) zugänglich zu machen, mittels dessen der Bodenabfall 15 vom Bodenteil 19 entfernt wird.

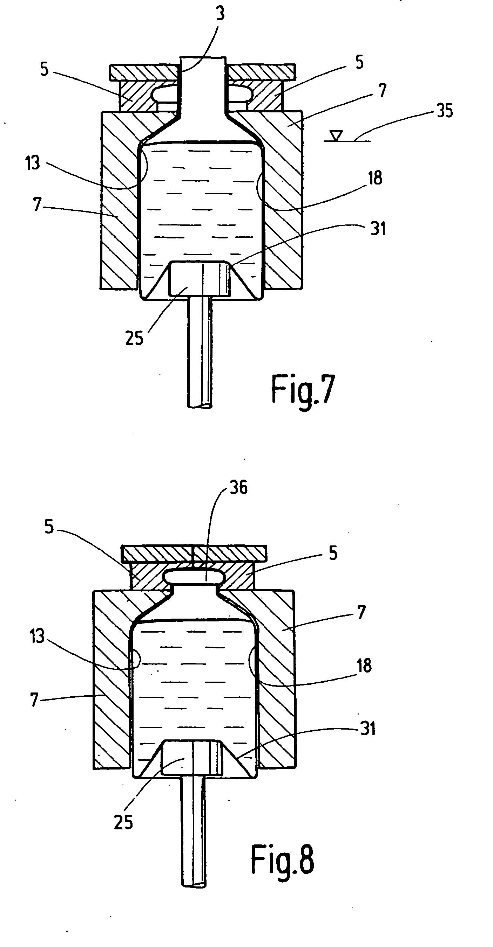

Die Fig. 5 zeigt den Zustand nach Entfernen des Bodenabfalles 15, wobei das Abtrennelement 21, bei dem es sich um Abreißstifte oder -dorne handeln kann, nach erfolgtem Abtrennvorgang aus dem Bereich der Bodenformteile 9 heraus bewegt ist. Gegenüber Fig. 4 sind diese um eine größere Wegstrecke auseinandergefahren, so dass, nachdem das Abtrennelement 21, wie mit Pfeil 23 angedeutet, seitlich weg bewegt ist, ein Druckstempel 25, nachdem er, wie mit weiterem Pfeil 27 angedeutet, axial auf den Bodenteil 19 ausgerichtet ist (diese Position ist in Fig. 6 dargestellt) zwischen die geöffneten Bodenformteile 9 eintreten kann. Durch eine Hubbewegung, wie sie in Fig. 6 mit Pfeil 29 angedeutet ist, kann nunmehr das topfartige Bodenteil 19 in den Behälterhauptteil 18 hinein umgestülpt werden. Wie in Fig. 7 gezeigt, wird dadurch die durch das topfartige Bodenteil 19 bislang gebildete axiale Verlängerung des Behälterhauptteiles 18 in eine ins Behälterinnere ragende Bodenerhebung 31 übergeführt. Dadurch steigt der Füllpegel von dem in Fig. 6 mit 33 bezeichneten Niveau auf das in Fig. 7 mit 35 bezeichnete Niveau. Beim Vorgang des Befüllens wird dies hinsichtlich der Bemessung der Füllmenge in Rechnung gesetzt.

Fig. 8 unterscheidet sich gegenüber Fig. 7 lediglich insofern, als durch Überführen der Kopfformteile 5 in die geschlossene Position die Form des Kopfverschlusses 36 gebildet ist, was beispielsweise durch Vakuum unterstützt durchgeführt wird, verbunden mit einem durch Schweißen bewirkten Schließvorgang.

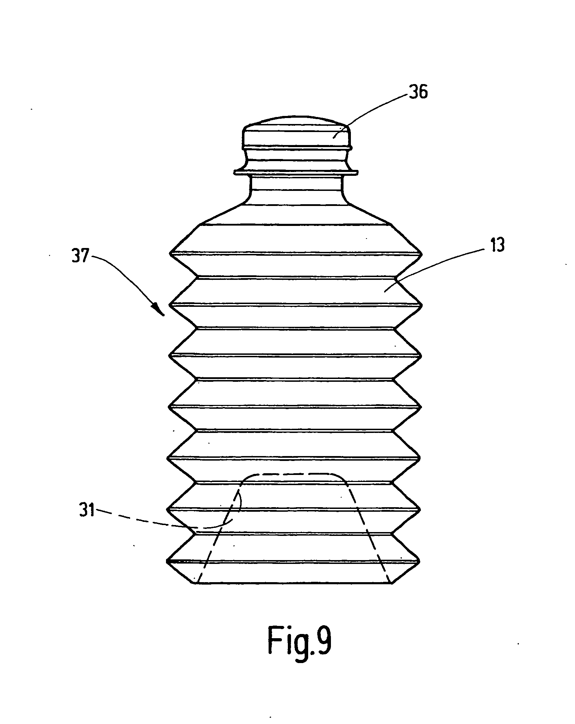

Während in den Fig. 1 bis 8 die Innenwand der Hauptformteile 7 glattflächig dargestellt und beschrieben ist, kann die Blasform in an sich bekannter Weise so gestaltet werden, dass der Behälterhauptteil einen Faltenbalg 37 bildet, siehe Fig. 9, wo ein Ausführungsbeispiel eines derart gestalteten Behälters 13 gezeigt ist. Derartige, als Faltenbalg gestaltete Behälter 13 werden bevorzugt dazu benutzt, das Füllgut durch axiales Zusammendrücken des Faltenbalges 37 auszugeben. Das Problem eines beträchtlichen, beim Ausdrücken verbleibenden Restvolumens tritt bei Faltenbalgen verstärkt auf, weil sich der Faltenbalg 37 lediglich so weit axial verkürzen läßt, bis die Falten geschlossen sind, wobei eine Totlänge verbleibt, die zumindest dem zweifachen der Wandstärke des Behälters, multipliziert mit der Faltenanzahl entspricht. Die erfindungsgemäß vorgesehene Bodenerhebung 31 bildet bei zusammengedrücktem Faltenbalg 37 einen Verdrängerkörper, der das ansonsten beträchtliche Restvolumen ausfüllt.

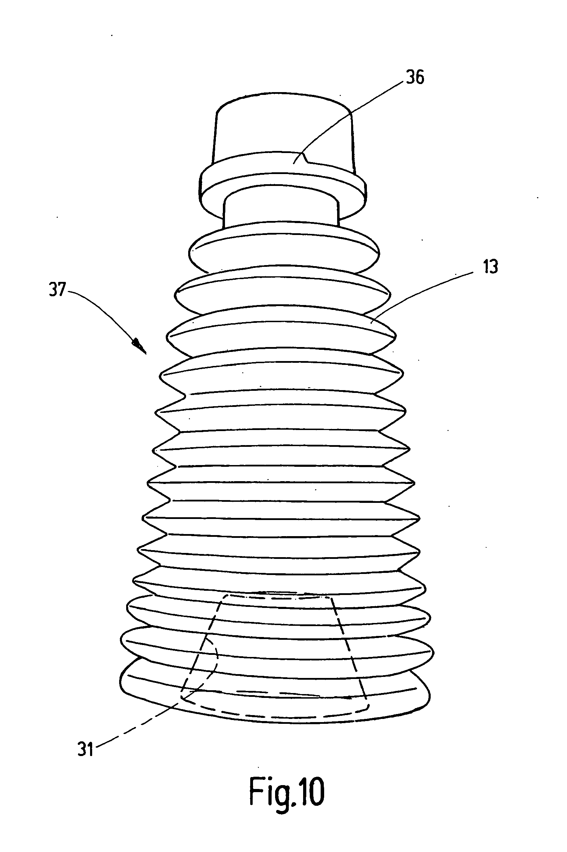

Dies wirkt sich besonders vorteilhaft bei Behältern 13 aus, bei denen der Faltenbalg 37 gegen den Kopfverschluß 36 hin eine konisch verjüngte Gestalt besitzt, wie dies bei dem in Fig. 10 gezeigten Beispiel der Fall ist. Hierbei läßt sich die Form und Abmessung der Bodenerhebung 31 durch entsprechende Gestaltung des topfartigen Bodenteiles 19 während des Formvorganges so ausbilden, dass die Bodenerhebung 31 möglichst passend an die Innenseite des zusammengedrückten Faltenbalges 37 im Kopfbereich angepaßt ist, wodurch ein bei vollständigem Zusammendrücken des Faltenbalges 37 verbleibendes Restvolumen minimiert ist.

Bei Behältern, die im Kopfbereich ein verjüngtes Halsteil aufweisen, kann durch entsprechende Gestaltung der Formwände der Bodenformteilen 9 das die Bodenerhebung bildende Bodenteil 19 so geformt werden, dass es im Zentralbereich derart verjüngt ist, dass die umgestülpte Bodenerhebung 31 ein in den Halsteil des Behälters passendes Endteil besitzt, so dass das Füllgut vollständig aus dem Behälter ausgedrückt werden kann.

## Patentansprüche

1. Verfahren zum Herstellen von Behältern (13) aus thermoplastischem Kunststoff, bei dem in eine Form, deren bewegbare Formteile (5, 7, 9) in eine die Form öffnende Stellung bewegt sind, ein extrudierter Kunststoffschlauch (3) eingeführt wird, zumindest die den Übergang von Behälterhauptteil (18) und Behälterboden bildenden Formteile (7) geschlossen werden, wobei der Behälterboden verschweißt wird, der Schlauch (3) durch einen an ihm wirksamen Druckgradient aufgeweitet und zur Bildung der Behälterform an die Wand der Formteile (5, 7, 9) angelegt wird und die Formteile für das Entformen des gebildeten Behälters (13) in die die Form öffnende Stellung bewegt werden, wobei der Behälterboden in der Form eines den Behälterhauptteil (18) axial verlängernden, topfartigen Bodenteiles (19) ausgebildet wird, wobei dieses zur Bildung einer in den Behälterhauptteil (18) ragenden Bodenerhebung (31) ins Innere des Behälters (13) umgestülpt wird, und wobei das topfartige Bodenteil (19) vor dem endgültigen Entformen des Behälters (13) in dessen Inneres hinein umgestülpt wird, wobei das topfartige Bodenteil (19) durch Bodenformteile (9) gebildet wird, die relativ zu den den Behälterhauptteil (18) formenden Hauptformteilen (7) bewegbar sind und in der geschlossenen Stellung das Bodenteil (19) verschweißen, **dadurch gekennzeichnet, dass** die Bodenformteile (9) für das Umstülpen des Bodenteiles (19) in eine die Form teilweise öffnende Stellung auseinander bewegt werden, und dass das Umstülpen durch mechanischen Eingriff zwischen den entsprechend weit auseinander bewegten Bodenformteilen (9) durchgeführt wird.

2. Verfahren nach Anspruch 1, **dadurch gekennzeichnet, dass** das Umstülpen des Bodenteiles (19) mechanisch durch Beaufschlagen des Bodenteiles (19) durch einen Stempel (25) durchgeführt wird, der konzentrisch zur Behälterachse bewegbar angetrieben ist.

3. Verfahren nach Anspruch 1 oder 2, **dadurch gekennzeichnet, dass** vor dem Umstülpen des Bodenteiles (19) das an dessen Schweißstelle befindliche Abfallmaterial (15) mittels eines Abtrennelementes (21) abgetrennt wird.

4. Vorrichtung zum Durchführen des Verfahrens nach einem der Ansprüche 1 bis 3, mit eine Blasform bildenden bewegbaren Formteilen (5, 7, 9), wobei sich an ein den Behälterhauptteil (18) des Behälters (13) bildendes Formteilepaar (7) ein unabhängig von diesem bewegbares Paar Bodenformteile (9) anschließt, die in der geschlossenen Position einen topfartigen Formhohlraum zur Bildung eines den Behälterhauptteil (18) axial verlängernden, topfartigen Bodenteiles (19) definieren, **dadurch gekennzeichnet, dass** die Bodenformteile (9) für das Umstülpen des Bodenteiles (19) in eine die Form teilweise öffnende Stellung auseinander bewegbar sind, und dass das Umstülpen durch mechanischen Eingriff zwischen den entsprechend weit auseinander bewegten Bodenformteilen (9) durchführbar ist.

5. Vorrichtung nach Anspruch 4, **dadurch gekennzeichnet, dass** die Bodenformteile (9) Schweißbacken zum Verschweißen des topfartigen Bodenteiles (19) aufweisen.

6. Vorrichtung nach Anspruch 4 oder 5, **dadurch gekennzeichnet, dass** ein für eine hin- und hergehende Axialbewegung antreibbarer, auf die Behälterlängsachse ausrichtbarer Druckstempel (25) vorgesehen ist, mittels dessen bei entsprechend geöffneten Bodenformteilen (9) das topfartige Bodenteil (19) in den Behälterhauptteil (18) hinein umstülpbar ist.

7. Vorrichtung nach Anspruch 6, **dadurch gekennzeichnet, dass** ein mechanisch bewegbares, bei entsprechend geöffneten Bodenformteilen (9) auf die Behälterlängsachse ausrichtbares Abtrennelement (21) zum Entfernen des an der Schweißstelle des topfartigen Bodenteiles (19) gebildeten Bodenabfalles (15) vorgesehen ist.

## Claims

1. A process for producing containers (13) of thermoplastic wherein an extruded plastic tube (3) is inserted into a mould the moveable mould parts (5, 7, 9) of which are moved into a position which opens the mould, at least the mould parts (7) forming the transition from the main part (18) of the container and the bottom of the container are closed, the container bottom being welded, the tube (3) being widened by a pressure gradient acting on it, and being placed against the wall of the mould parts (5, 7, 9) to form the container shape and the mould parts being moved into the position opening the mould for the removal of the formed container (13) from the mould, the container bottom being formed in the form of a cup-like bottom part (19) extending the main part (18) of the container axially, this bottom part being everted into the interior of the container (13) so as to form a bottom elevation (31) projecting into the main part (18) of the container, and the cup-like bottom part (19) being everted into the interior of the container (13) before finally removing the latter from the mould, the cup-like bottom part (19) being formed by bottom mould parts (9) which can be moved relative to the main mould parts (7) which mould the main part (18) of the container and weld the bottom part (19) in the closed position, **characterised in that** the bottom mould parts (9) are moved apart from one another into a position which partially opens the mould in order to evert the bottom part (19) and that the bottom mould parts (9) are everted by mechanical engagement between the bottom mould parts (9) moved apart from one another accordingly.

2. The process according to Claim 1, **characterised in that** the bottom part (19) is mechanically everted by applying to the bottom part (19) a mould die (25) which is driven such as to be moveable concentrically to the axis of the container.

3. The process according to Claim 1 or 2, **characterised in that** before everting the bottom part (19) the waste material (15) located at its weld point is trimmed by means of a trimming element (21).

4. An apparatus for implementing the process according to any of Claims 1 to 3, with moveable mould parts (5, 7, 9) forming a blow mould, a pair of moulded parts (7) forming the main part (18) of the container (13) adjoining a pair of bottom mould parts (9) which can be moved independently thereof and which in the closed position define a cup-like mould cavity for formation of a cup-like bottom part (19) extending the main part (18) of the container axially, **characterised in that** the bottom mould parts (9) can be moved apart from one another into a position partially opening the mould in order to evert the bottom part (19) and that the eversion can be implemented by mechanical engagement between the bottom mould parts (9) moved apart from one another accordingly.

5. The apparatus according to Claim 4, **characterised in that** the bottom mould parts (9) have welding jaws for welding the cup-like bottom part (19).

6. The apparatus according to Claim 4 or 5, **characterised in that** a plunger (25) that can be driven for axial movement to and fro and that can be aligned to the longitudinal axis of the container is provided by means of which the cup-like bottom part (19) can be everted into the main part of the container (18) when the bottom mould parts (9) are opened accordingly.

7. The apparatus according to Claim 6, **characterised in that** a mechanically moveable trimming element (21) which can be aligned to the longitudinal axis of the container when the bottom mould parts (9) are opened accordingly is provided for removing the bottom waste (15) which has formed at the weld point of the cup-like bottom part (19).

## Revendications

1. Procédé de fabrication de récipients (13) en matière plastique thermoplastique, dans lequel on introduit dans un moule, dont les parties (5, 7, 9) mobiles sont mises dans une position ouvrant le moule, un conduit (3) souple extrudé en matière plastique ; on ferme au moins les parties (7) du moule formant la transition de la partie (18) principale du récipient et le fond du récipient, le fond du récipient étant soudé, on élargit le conduit (3) souple par un gradient de pression agissant sur lui, et pour donner sa forme au récipient, on l'applique à la paroi des parties (5, 7, 9) du moule et on met les parties du moule, pour le démoulage du récipient (13) formé, dans la position ouvrant le moule, le fond du récipient étant constitué sous la forme d'une partie (19) de fond de type en pot prolongeant axialement la partie (18) principale du récipient, cette partie de fond étant, pour la formation d'une surévaluation (31) du fond pénétrant dans la partie (18) principale du récipient, relevée à l'intérieur du récipient (13), et la partie (19) de fond en forme de pot étant, avant le démoulage final du récipient (13), relevée à l'intérieur de celui-ci, la partie (19) de fond en forme de pot étant formée par des parties (9) de moule de fond, qui sont mobiles par rapport aux parties (7) de moule principal formant la partie (18) principale du récipient, et soudant la partie (19) de fond dans la position fermée, **caractérisé en ce que** l'on écarte l'une de l'autre, pour les faire venir en une position ouvrant en partie le moule, les parties (9) du moule de fond pour relever la partie (19) du fond et **en ce que** l'on effectue le relevage en intervenant mécaniquement entre les parties (9) de moule du fond écartées l'une de l'autre d'une manière adéquate.

2. Procédé suivant la revendication 1, **caractérisé en ce que** l'on effectue le relevage de la partie (19) du fond mécaniquement, en soumettant la partie (19) du fond à l'action d'un poinçon (25) qui est entraîné de manière à être mobile concentriquement à l'axe du récipient.

3. Procédé suivant les revendications 1 ou 2, **caractérisé en ce qu'**avant le relevage de la partie (19) du fond, la matière (15) de chute se trouvant en son point de soudure est séparée au moyen d'un élément (21) de séparation.

4. Dispositif pour effectuer le procédé suivant l'une des revendications 1 à 3, comprenant des parties (5, 7, 9) de moule mobiles formant un moule de soufflage, dans lequel, à une paire de parties du moule formant la partie (18) principale du récipient (13), se raccordent, indépendamment de cette paire mobile, des parties (9) de moule du fond, qui, dans la position fermée, définissent une empreinte de moule en forme de pot pour la formation d'une partie (19) de fond en forme de pot prolongeant axialement la partie (18) principale du récipient, **caractérisé en ce que** les parties (9) en forme de fond sont, pour relever la partie (19) de fond, mobiles en s'écartant l'une de l'autre pour venir dans une position ouvrant le moule en partie, et **en ce que** le relevage peut s'effectuer par intervention mécanique entre les parties (9) de moule du fond écartées l'une de l'autre d'une manière adéquate.

5. Dispositif suivant la revendication 4, **caractérisé en ce que** les parties (9) de moule du fond ont des mâchoires de soudure pour le soudage de la partie (19) de fond en forme de pot.

6. Dispositif suivant les revendications 4 ou 5, **caractérisé en ce qu'**il est prévu un poinçon (25) d'application d'une pression, pouvant être entraîné suivant un mouvement axial d'aller et retour, pouvant être orienté sur l'axe longitudinal du récipient et au moyen duquel, lorsque les parties (9) de moule du fond sont ouvertes d'une manière adéquate, la partie (19) de fond en forme de pot peut être relevée dans la partie (18) principale du récipient.

7. Dispositif suivant la revendication 6, **caractérisé en ce qu'**un élément (21) de séparation, mobile mécaniquement et pouvant être dirigé sur l'axe longitudinal du récipient lorsque des parties (9) de moule du fond sont ouvertes d'une manière adéquate, est prévu pour l'élimination de la chute (15) de fond formé sur le point de soudure de la partie (19) de fond en forme de pot.
